# FASCICULE DE BREVET EUROPEEN

(11) **EP 3 362 208 B1**
(45) Date de publication et mention de la délivrance du brevet: **09.10.2019**
(21) Numéro de dépôt: 16781749.3
(22) Date de dépôt: 11.10.2016
(51) Int. Cl.: B22F 3/105, B22F 9/24, B22F 1/00, H01M 4/139, H01M 4/04, B01J 19/00, H01M 10/052, B22F 3/00

(54) **SYSTÈME DE PROJECTION DE PARTICULES SUR UN SUBSTRAT, INTÉGRANT UN RÉACTEUR POUR LA PRODUCTION DES PARTICULES À PROJETER**
SYSTEM ZUM SPRÜHEN VON PARTIKELN AUF EIN SUBSTRAT MIT EINEM REAKTOR ZUR HERSTELLUNG DER AUFZUSPRÜHENDEN TEILCHEN
SYSTEM FOR SPRAYING PARTICLES ONTO A SUBSTRATE, COMPRISING A REACTOR FOR PRODUCING THE PARTICLES TO BE SPRAYED

(30) Priorité: 14.10.2015 FR 1559766
(43) Date de publication de la demande: 22.08.2018
(73) Titulaire: Commissariat à l'Energie Atomique et aux Energies Alternatives, 75015 Paris (FR)
(72) Inventeur: PERALTA, David, 38000 Grenoble (FR)
(74) Mandataire: Brevalex
(86) Numéro de dépôt international: PCT/EP2016/074363
(87) Numéro de publication internationale: WO 2017/064073

(56) Documents cités:
- WO-A1-2015/082677
- US-A1- 2009 288 601
- US-A1- 2013 087 020

## Description

### DOMAINE TECHNIQUE

La présente invention se rapporte à un système et à un procédé de projection de particules sur un substrat, ce type de système étant également dénommé « système d'impression de particules », et par exemple connu du document US 2009/288601.

De façon non limitative, l'invention trouve des applications dans la fabrication de pistes imprimées, de composants de batteries, ou encore de tout autre composant électronique.

Une application privilégiée concerne le domaine de la fabrication additive d'un objet, également dénommée impression 3D, par empilement de couches successives de particules.

### ETAT DE LA TECHNIQUE ANTERIEURE

De façon connue, les systèmes d'impression déposent ou projettent sur un substrat une encre comprenant des particules/pigments en suspension dans un solvant. Après le dépôt des particules sur le substrat, l'encre est ensuite séchée et les particules sont agglomérées/frittées sur le substrat. La formulation de l'encre s'avère souvent très complexe, celle-ci étant habituellement constituée de différents éléments. Pour obtenir une encre, différentes étapes sont nécessaires.

Tout d'abord, il est réalisé la production de particules dans les matériaux désirés. Ces particules peuvent être obtenues par synthèse en voie liquide, ou en voie sèche. Dans tous les cas, les installations permettant la production de ces particules sont volumineuses et imposent un stockage et un conditionnement important des poudres ainsi obtenues.

Parmi les étapes constitutives de l'encre, il faut également noter la formulation de cette encre, qui dépend de différents paramètres tels que :
- les propriétés du matériau constituant les particules : en fonction de ces propriétés, il est requis l'utilisation de polymères ou de différents solvants dépendant de la densité, de la surface spécifique et de l'état de surface du matériau ;
- la nature du système d'impression : la viscosité de l'encre doit être précise et spécifique pour permettre son bon fonctionnement dans le système d'impression ;
- la fonction de la couche déposée : cette fonction peut conditionner l'ajout d'additifs tels que des composants carbonés afin d'augmenter la conductivité de la couche, ou encore l'ajout d'un liant pour l'obtention d'une meilleure tenue mécanique du matériau imprimé.

Parmi les autres étapes constitutives de l'encre, il faut également citer la production de cette encre, souvent réalisée dans des volumes importants. Cette production requiert par conséquent une grande quantité de solvants, ainsi que des installations volumineuses.

Enfin, une ultime étape réside dans le conditionnement de l'encre, habituellement en cartouches. Cependant, la bonne suspension des particules au sein d'une cartouche n'est assurée que pour une durée définie. Au-delà, les particules risquent de sédimenter au sein de la cartouche.

Une fois l'ensemble de ces étapes réalisées, les cartouches sont chargées dans le système d'impression et la projection des particules contenues dans l'encre peut être initiée.

Au vu de ce qui précède, il existe un besoin de simplification de l'ensemble de ce processus visant à projeter des particules sur un substrat.

De l'art antérieur, il est également connu du domaine de la fabrication additive, la réalisation d'un objet par empilement de couches successives de poudre, cette technique étant dénommée impression 3D. Les particules à déposer constituent la poudre, qui est d'abord chargée dans un espace de chargement dédié de la machine utilisée. Lors de la manipulation de la poudre effectuée dans le cadre de ce chargement, le risque de dissémination de poudre est élevé. Un tel risque existe également lors de l'étape finale de déchargement de l'objet fabriqué, entouré de la poudre non liée. Cette dissémination de poudre présente plusieurs inconvénients.

Tout d'abord, les particules de poudre émises dans l'atmosphère génèrent une perte de matière, dont l'impact financier peut être important. Ensuite, cette perte peut conduire à une variation non-désirée de composition. C'est par exemple le cas lorsque la poudre manipulée est constituée par un mélange de poudres de différentes natures, la stoechiométrie pouvant alors être altérée.

La dissémination de poudre peut également requérir une maintenance accrue des équipements. En effet, ces poudres déposées dans l'environnement de travail sont des vecteurs d'encrassement pour les appareillages. Par conséquent, des actions de maintenances spécifiques peuvent être engendrées par une dissémination non contrôlée.

La dissémination de poudre peut aussi engendrer des risques pour la santé et la sécurité des opérateurs. Par exemple, l'inhalation ou le contact cutané avec une poudre réputée dangereuse peut avoir des effets sur la santé, en provoquant des irritations, des allergies, des atteintes du système nerveux, voire des cancers. Même les poudres considérées comme inertes, c'est-à-dire sans toxicité spécifique, peuvent, lorsqu'elles sont présentes en quantité importante, provoquer une surcharge pulmonaire éventuellement associée à une fibrose pulmonaire.

Pour permettre une manipulation sécurisée au regard des problématiques de dissémination ou de pulvérulence de la poudre, plusieurs solutions ont déjà été proposées dans l'art antérieur, comme la mise en oeuvre d'installations de captage de poussières. Cependant, ces solutions restent perfectibles et ne s'avèrent pas nécessairement adaptées au domaine de la fabrication additive d'objet par empilement de couches successives de poudre.

### EXPOSÉ DE L'INVENTION

Pour répondre au moins partiellement aux inconvénients relatifs aux réalisations de l'art antérieur, l'invention a tout d'abord pour objet un système de projection de particules sur un substrat, selon les caractéristiques de la revendication 1.

L'invention prévoit astucieusement de coupler, au sein d'un même système, un réacteur pour la production des particules et un dispositif de dispense de ces particules sur le substrat.

En synthétisant directement les particules in situ dans le système de projection, les étapes préliminaires visant à la production de ces particules sont largement simplifiées. En particulier, les particules ne sont plus stockées sous forme d'encre dans des cartouches. Par conséquent, du fait de la suppression de l'étape de production de l'encre, les quantités de solvants mises en jeu sont avantageusement réduites. Il n'est plus nécessaire d'obtenir une encre stabilisée qui évite la sédimentation des particules dans les cartouches. La mise en oeuvre d'éléments stabilisants, comme des polymères ou autres, n'est donc plus requise. Il en découle avantageusement un impact écologique fort.

L'invention procure d'autres avantages, décrits ci-dessous.

Tout d'abord, comme indiqué précédemment, les particules à projeter sont produites directement dans le système, de préférence en continu et à la demande, de façon contrôlée. Il n'est par conséquent plus nécessaire de synthétiser ces particules en grande quantité dans des réacteurs volumineux. A cet égard, il noté que de nombreuses applications nécessitent l'utilisation de nanoparticules métalliques ou de nanoparticules d'oxydes. Or la synthèse de ces particules en grande quantité, ainsi que leur stockage et leur manipulation, sont extrêmement difficiles à grande échelle. La mise en oeuvre du réacteur miniaturisé au sein du système de projection permet d'obtenir directement des nanoparticules métalliques ou des nanoparticules d'oxydes, en s'affranchissant de l'ensemble des problèmes précédemment cités.

Egalement, l'invention permet d'imprimer des composés très réactifs à partir de particules difficilement stockables, comme par exemple des nanoparticules métalliques, certains catalyseurs, etc. Par exemple, les particules nanométriques d'aluminium sont hautement pyrophoriques, et il s'avère extrêmement difficile de les synthétiser, de les stocker et de les manipuler. La synthèse in situ proposée par l'invention permet donc de s'affranchir de ces problèmes.

Enfin, il est noté que l'invention permet également d'éviter les risques de dissémination des particules, car celles-ci ne sont pas directement manipulées par l'opérateur. En effet, seuls les réactifs liquides sont chargés dans le système de projection, ces mêmes réactifs conduisant à la synthèse des particules au sein du système, grâce au réacteur intégré, prévu à cet effet.

L'invention présente de préférence au moins l'une des caractéristiques additionnelles suivantes, prises isolément ou en combinaison.

Ledit réacteur est un réacteur microfluidique, de préférence du type comprenant des plaques en silice, en silicium, en verre, en céramique ou en plastique possédant des canaux gravés, ou du type comprenant des tubes capillaires communiquant entre eux.

Le dispositif de dispense comporte également un organe de mélange agencé dans la zone de mélange, ledit organe de mélange étant préférentiellement une sonde à ultrasons, ou un système acoustique de mélange.

La partie aval de la zone de mélange constitue une zone tampon, cette zone tampon permettant en effet de former un réservoir pour conserver une quantité de mélange nécessaire pour permettre la projection du mélange à la demande. En d'autres termes, ce réservoir permet de conférer une certaine inertie au système de sorte à éviter une situation de manque d'encre. Bien entendu, cette zone tampon peut également être prévue lorsque les particules synthétisées sont projetées sans avoir été mélangées au préalable avec des éléments additifs.

De préférence, le système comporte plusieurs réacteurs, afin de produire des particules de différentes natures.

Le système est configuré pour la réalisation d'au moins un composant de batterie, de préférence une batterie au lithium, même si d'autres applications sont envisageables, sans sortir du cadre de l'invention. Par exemple, il pourrait s'agir de composants de piles à combustible, de préférence à membranes échangeuses d'ions, ou bien l'impression de pistes sur un circuit imprimé.

Selon une application envisagée, le système est une machine de fabrication additive configurée pour la réalisation par impression 3D d'au moins deux composants adjacents de batterie, de préférence un collecteur et une électrode formée sur le collecteur.

De préférence, le système comporte également des moyens de frittage des particules. Alternativement, ces moyens de frittage pourraient être prévus au sein d'un module séparé du système de projection, sans sortir du cadre de l'invention.

Enfin, le système de projection de particules est configuré de façon à ce que les particules issues du réacteur présentent une forme dont la plus grande dimension est inférieure à 100 µm. De façon plus générale, les particules issues du réacteur sont des particules de préférence de taille nanométrique, présentent une grande dimension comprise entre 1 nm et 100 µm, de préférence entre 1 nm et 1 µm.

L'invention a également pour objet un procédé de projection de particules sur un substrat à l'aide d'un système tel que décrit ci-dessus, le procédé comprenant les étapes suivantes :
- alimentation du réacteur en réactifs liquides ;
- contrôle de la réaction chimique au sein du réacteur ;
- contrôle du débit de particules projetées sur le substrat par le dispositif de dispense.

Selon une possibilité offerte par l'invention, le substrat peut-être au déroulé.

Selon une application privilégiée de l'invention, celle-ci a enfin pour objet un procédé de fabrication par impression 3D d'au moins deux composants adjacents de batterie, de préférence un collecteur et une électrode formée sur le collecteur, le procédé étant mis en oeuvre à l'aide d'un système tel que décrit ci-dessus et comprenant deux réacteurs respectivement configurés pour fournir des premières particules ainsi que des secondes particules, l'un desdits deux composants adjacents de batterie étant réalisé à l'aide des premières particules qui sont d'abord déposées puis frittées, pour ensuite servir de substrat pour le dépôt des secondes particules formant, après frittage, l'autre desdits deux composants adjacents de batterie.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique d'un système de projection de particules selon un mode de réalisation préféré de l'invention ;
- la figure 2 est une vue schématisant une partie du réacteur microfluidique équipant le système montré sur la figure précédente ;
- les figures 3a à 3c représentent différentes configurations de fonctionnement du réacteur microfluidique ;
- la figure 4 est une vue en perspective d'une batterie dont au moins certains des composants peuvent être réalisés grâce au système de projection de particules montré sur les figures précédentes ; et
- la figure 5 est une vue schématisant une étape de fabrication de l'un des composants de la batterie montrée sur la figure précédente.

### EXPOSÉ DÉTAILLÉ DE MODES DE RÉALISATION PRÉFÉRÉS

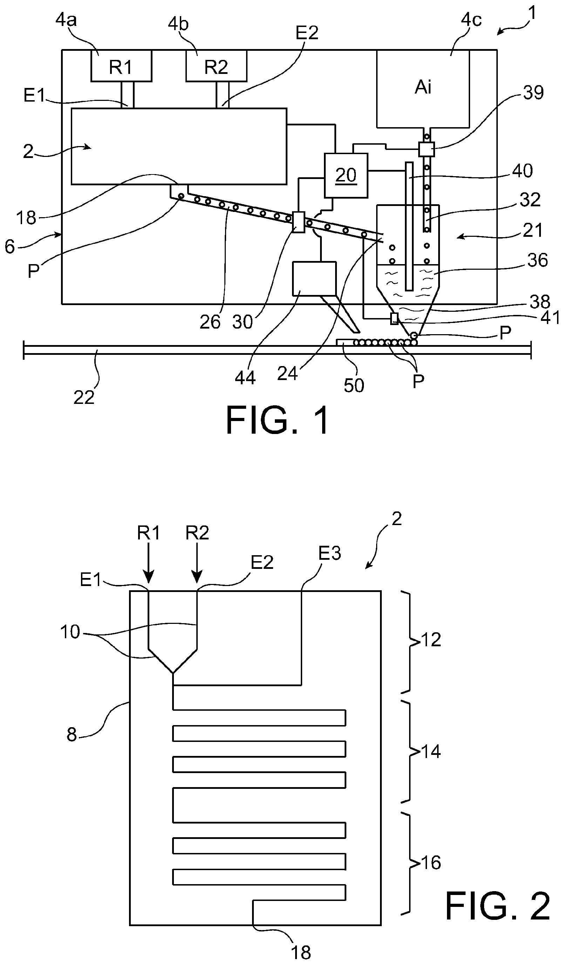

En référence tout d'abord à la figure 1, il est montré un système 1 de projection de particules P selon un mode de réalisation préféré de l'invention. Ce système 1 est également dénommé système de dépôt de particules ou système d'impression de particules, et présente la particularité d'intégrer un réacteur microfluidique 2 pour la production de ces particules P.

En effet, le réacteur 2 comporte des entrées E1, E2 pour l'admission de réactifs liquides R1, R2, ces entrées étant reliées à des réservoirs de réactifs 4a, 4b prévus au sein même du système 1. Ces réservoirs 4a, 4b sont ainsi accessibles depuis l'extérieur du système 1, en étant protégés par un capot extérieur 6 de ce système.

La figure 2 montre un exemple de réalisation du réacteur microfluidique 2, formé à l'aide d'une ou plusieurs plaques 8 en silice, en silicium, en verre, en céramique, en polymère ou en plastique, possédant des canaux gravés 10 pour la circulation des réactifs liquides R1, R2. Outre les entrées E1, E2, le réacteur comporte éventuellement une entrée E3 pour l'admission d'huile.

De l'amont vers l'aval, ce réacteur 2 comporte une zone d'admission et de mélange 12, une zone de réaction 14, une zone de chauffe 16, ainsi qu'une zone 18 de collecte des particules P. La zone de chauffe 16 permet de chauffer les particules générées à haute température, afin de favoriser leur oxydation. Alternativement, la zone de chauffe peut être déportée hors substrat dans un serpentin en inox mis en température.

Ce type de réacteur 2 possède l'avantage de permettre un contrôle total sur la morphologie des particules P synthétisées, grâce à l'unité de commande 20 du système 1. En effet, l'unité de commande 20 permet de contrôler le temps de séjour du mélange dans la zone de réaction 14, et ainsi d'avoir un parfait contrôle de la germination des particules P. Leur croissance peut alors être contrôlée en gérant le temps de séjour et la température dans la zone de chauffe 16. D'une manière générale, les particules P désirées à la sortie du réacteur 2 sont des particules de taille nanométrique, c'est-à-dire que leur plus grande dimension est comprise entre 1 nm et 1 µm.

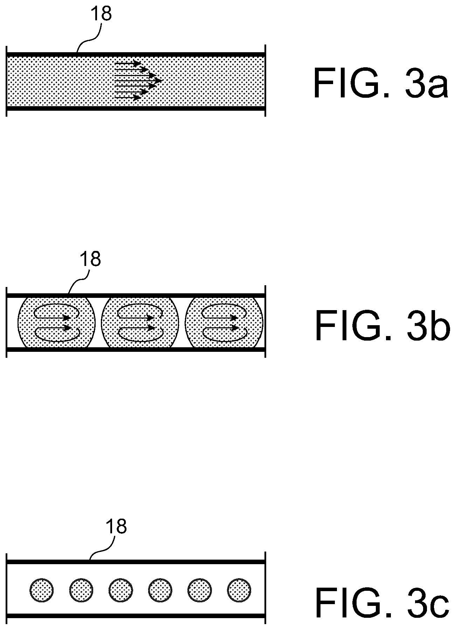

La commande du réacteur 2 peut aboutir à différents modes de fonctionnement, illustrés sur les figures 3a à 3c. Le premier mode de fonctionnement montré sur la figure 3a correspond à un mode de débit continu dans la zone 18 de collecte des particules. Dans le mode de fonctionnement de la figure 3b, correspondant à un mode segmenté, le mélange réactionnel est segmenté en plusieurs unités à l'aide d'un fluide immiscible. Enfin, dans le mode goutte de la figure 3c, le mélange réactionnel est segmenté en plusieurs unités qui ne touchent pas les parois de la zone 18 en forme de conduit.

Dans le cas d'une utilisation en mode continu, il existe le risque que le flux du mélange réactionnel ne soit pas uniforme, et donc que les particules ne présentent pas toutes les mêmes temps de séjour dans le réacteur. Il en découle un risque que particules synthétisées possèdent des propriétés différentes. Ainsi, les deux autres modes d'injection fragmentés sont préférés, soit en utilisant deux fluides non miscibles, soit en utilisant un mélange gaz/liquide.

En fonction de la diversité des particules P à projeter sur le substrat, le système 1 peut être équipé de plusieurs réacteurs distincts, du type de celui décrit ci-dessus. Dans ce cas, chacun des réacteurs 2 est conçu pour délivrer des particules de natures différentes, fonction des réactifs liquides utilisés.

De retour à la figure 1, le système 1 comporte un dispositif de dispense 21 permettant de projeter les particules P sur un substrat 22. Ce dispositif 21 comporte un collecteur de particules 24, relié à la zone de collecte 18 du réacteur par un conduit d'acheminement de particules 26. Ce conduit 26 est équipé d'une vanne de commande 30 pour réguler le débit de particules P pénétrant dans le collecteur 24 du dispositif de dispense 21. La vanne 30 est commandée par l'unité 20 intégrée au système de projection 1.

Dans ce mode de réalisation préféré, il est souhaité un mélange des particules synthétisées P avec un ou plusieurs éléments additifs Ai, par exemple un liant polymère type PVDF, un composé carboné ou métallique, afin de favoriser la conductivité. Pour ce faire, le dispositif de dispense 21 est également équipé d'un collecteur 32 d'éléments additifs Ai, ce collecteur 32 étant relié à un réservoir d'éléments additifs 4c, intégré au sein du système 1. Le débit d'élément additifs Ai introduit dans la zone de mélange 36 est contrôlé par une vanne 39 commandée par l'unité 20.

Les particules P et les éléments additifs Ai se retrouvent dans une zone de mélange 36 du dispositif de dispense 21, cette zone de mélange 36 conduisant à une buse 38 de projection du mélange de particules et d'éléments additifs sur le substrat 22.

Pour favoriser le mélange dans la zone 36, le dispositif de dispense 21 est également équipé d'un organe de mélange 40 agencé dans cette zone 36. L'organe 40 prend par exemple la forme d'une sonde à ultrasons, commandée par l'unité 20.

La partie aval de la zone de mélange 36 constitue une zone tampon, c'est-à-dire un réservoir pour conserver une quantité de mélange nécessaire pour permettre la projection du mélange à la demande par la buse 38. Une vanne 41 commandée par l'unité 20 permet de réguler le débit souhaité à travers la buse 38.

A cet égard, il est noté que la projection des particules P par la buse 38 s'effectue de manière à mettre en oeuvre une technique d'impression connue, telles que l'injection d'encre (de l'anglais « Inkjet »), la sérigraphie (de l'anglais « screen-printing »), l'impression par jet d'aérosol (de l'anglais « aerosol jet printing »).

Enfin, le système de projection 1 peut également comprendre des moyens de frittage conventionnels 44, permettant de consolider les particules P après leur dépôt sur le substrat 22. Néanmoins, ces moyens 44 pourraient être déportés du système 1, sans sortir du cadre de l'invention. Dans le cas où ils sont intégrés au système 1, ils sont préférentiellement contrôlés par l'unité de commande 20.

Selon un premier exemple d'application de l'invention, le système de projection 1 est dédié à la réalisation d'un composant de batterie, de préférence une électrode pour batterie au lithium.

Pour ce faire, des particules P sont projetées sur une feuille d'aluminium en défilement, formant le substrat 22. Les particules P déposées par le système 1 sont ensuite frittées pour assurer leur consolidation. A titre d'exemple, les particules P sont du type nanoparticules d'oxydes, et sont obtenues à l'aide des réactifs. A cet égard, il est noté que les précurseurs de nanoparticules sont du type sels métalliques dissous, des précipitateurs de type carbonate, etc., et d'autres éléments connus de l'homme du métier.

Le procédé mis en oeuvre pour l'obtention en continu de l'électrode 50 sur le substrat 22, comprend l'alimentation du réacteur 2 par l'opérateur, en réactifs liquides R1, R2. Ensuite, les autres étapes sont commandées par l'unité de commande 20. Elles comprennent le contrôle de la réaction chimique au sein du réacteur 2, le contrôle du débit de particules P introduit dans le dispositif de dispense 21, le contrôle de l'éventuel débit d'éléments additifs Ai introduit dans le dispositif 21, le contrôle de la sonde de mélange 40, ainsi que le contrôle du débit de particules P projetées sur le substrat 22 par la buse 38.

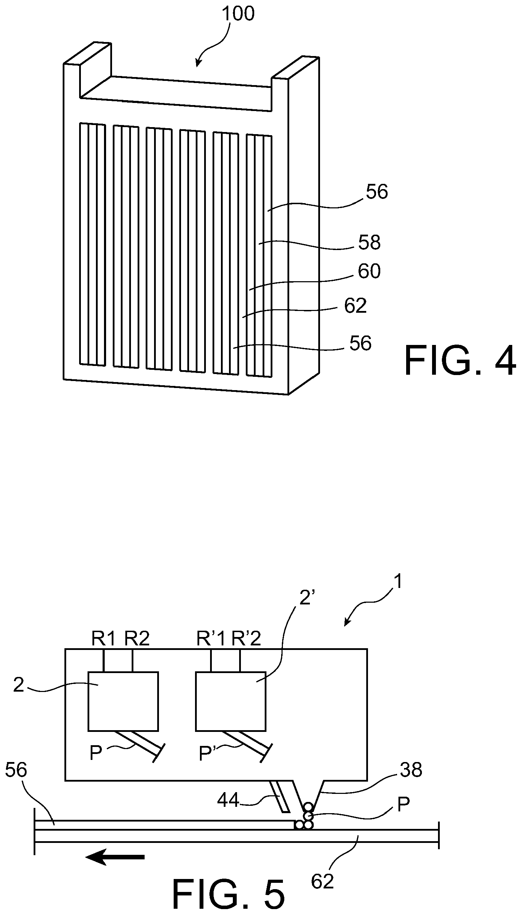

La figure 4 montre une batterie au lithium 100 de conception connue, comprenant l'empilement des éléments suivants : une cathode 56, un électrolyte 58, une anode 60, un collecteur de courant 62, une cathode 56, etc.

Le premier exemple d'application décrit ci-dessus peut ainsi permettre la réalisation de la cathode 56 par projection de particules sur un collecteur 62 en forme de feuille d'aluminium, et/ou la réalisation de l'anode 60 par projection de particules sur ce collecteur 62.

Un second exemple d'application concerne toujours les batteries, mais pour la réalisation successive d'au moins deux composants adjacents par impression 3D. De préférence, il s'agit de la réalisation par impression 3D du collecteur 62 et de la cathode 56 superposée sur le collecteur. Pour ce faire, le système 1 prend la forme d'une machine de fabrication additive permettant la mise en oeuvre d'un procédé illustré sur la figure 5. La machine 1 est alors identique ou similaire au système décrit ci-dessus, avec la particularité de présenter deux réacteurs microfluidiques 2, 2', chacun destiné à être alimenté en réactifs liquides R1, R2 ; R'1, R'2. Les deux réacteurs sont raccordés à un même dispositif de dispense 21, ou bien à des dispositifs distincts intégrés à la machine 1.

Tout d'abord, il est formé le collecteur de courant 62 par projection de particules P' issues du réacteur 2', ces particules étant du type nanoparticules métalliques, de préférence des nanoparticules d'aluminium. Ces particules P', dites premières particules, sont obtenues à l'aide des réactifs R'1, R'2 suivants : sel d'aluminium, sel de cuivre. Elles sont projetées sur un substrat (non représenté), qui peut être un autre composant de la batterie 100.

Après projection, ces premières particules P' sont frittées par les moyens dédiés 44. Cette étape de fabrication du collecteur 62 peut être réalisée en plusieurs couches successives, empilées selon la direction d'empilement des éléments constitutifs de la batterie 100. Chaque couche de particules P' est d'abord déposée, puis frittée.

Ensuite, le collecteur 62 ainsi formé peut servir de substrat pour le dépôt de la cathode 56. Celle-ci est en effet réalisée par projection de particules P issues du réacteur 2, ces particules étant du type nanoparticules d'oxydes, de préférence des nanoparticules d'oxydes métalliques. Ces particules P, dites secondes particules, sont obtenues à l'aide des réactifs R1, R2 suivants : Sel de Nickel, sel de Manganèse, sel de cobalt, sel de lithium ainsi qu'une solution permettant la précipitation de la solution métallique comme NaOH, KOH, LiOH, Na2CO3, etc.

Après projection, ces secondes particules P sont frittées par les moyens dédiés 44. Cette étape de fabrication de la cathode 56 peut être réalisée en plusieurs couches successives, empilées selon la direction d'empilement des éléments constitutifs de la batterie 100. Ici aussi, chaque couche de particules P est d'abord déposée, puis frittée.

Cette série d'étapes est réalisée autant de fois de nécessaire pour intégrer les composants de batterie voulus au sein de la pièce finale, réalisée par impression 3D. Cette pièce pourrait par exemple intégrer un électrolyte, une anode, etc.

Enfin, il est noté que dans ce procédé de fabrication, chacun des composants de la batterie 100 peut lui-même être réalisé à partir de plusieurs types de particules, sans sortir du cadre de l'invention.

## Revendications

1. Système (1) de projection de particules (P) sur un substrat (22), **caractérisé en ce qu'**il comprend :
- au moins un réacteur (2) comportant au moins une entrée de réactifs liquides (R1, R2), une zone de réaction (14), ainsi qu'une zone (18) de collecte des particules (P) produites à partir des réactifs liquides dans la zone de réaction ;
- un dispositif de dispense (21) permettant de projeter lesdites particules (P) sur le substrat (22) ; et
- des moyens (26) d'acheminement des particules (P) de ladite zone de collecte (18) vers ledit dispositif de dispense (21),
et ce qu'il comporte également :
- un collecteur (24) desdites particules (P) ;
- un collecteur (32) d'éléments additifs (Ai) ;
- une zone de mélange (36) des particules (P) et des éléments additifs (Ai) ;
- une buse (38) de projection du mélange de particules et d'éléments additifs.

2. Système selon la revendication 1, **caractérisé en ce que** ledit réacteur (2) est un réacteur microfluidique, de préférence du type comprenant des plaques (8) en silice, en silicium, en verre, en céramique, en polymère ou en plastique possédant des canaux gravés (10), ou du type comprenant des tubes capillaires communiquant entre eux.

3. Système selon la revendication 1 ou la revendication 2, **caractérisé en ce que** le dispositif de dispense (21) comporte également un organe de mélange (40) agencé dans la zone de mélange (36), ledit organe de mélange étant préférentiellement une sonde à ultrasons.

4. Système selon l'une quelconque des revendications précédentes, **caractérisé en ce que** la partie aval de la zone de mélange (36) constitue une zone tampon.

5. Système selon l'une quelconque des revendications précédentes, **caractérisé en ce qu'**il comporte plusieurs réacteurs (2, 2').

6. Système selon l'une quelconque des revendications précédentes, **caractérisé en ce qu'**il comporte également des moyens (44) de frittage des particules.

7. Système selon l'une quelconque des revendications précédentes, **caractérisé en ce qu'**il est configuré de façon à ce que les particules (P) issues du réacteur présentent une forme dont la plus grande dimension est inférieure à 100 µm.

8. Procédé de projection de particules (P) sur un substrat (22) à l'aide d'un système (1) selon l'une quelconque des revendications précédentes, **caractérisé en ce qu'**il comprend les étapes suivantes :
- alimentation du réacteur (2) en réactifs liquides (R1, R2) ;
- contrôle de la réaction chimique au sein du réacteur (2) ;
- contrôle du débit de particules (P) projetées sur le substrat (22) par le dispositif de dispense (21).

9. Procédé de fabrication par impression 3D d'au moins deux composants adjacents (62, 56) d'une batterie (100), de préférence un collecteur (62) et une électrode (56) formée sur le collecteur, **caractérisé en ce qu'**il est mis en oeuvre à l'aide d'un système (1) selon l'une quelconque des revendication 1 à 7 et comprenant deux réacteurs (2', 2) respectivement configurés pour fournir des premières particules (P') ainsi que des secondes particules (P), l'un (62) desdits deux composants adjacents de batterie étant réalisé à l'aide des premières particules (P') qui sont d'abord déposées puis frittées, pour ensuite servir de substrat pour le dépôt des secondes particules (P) formant, après frittage, l'autre (56) desdits deux composants adjacents de batterie.

## Patentansprüche

1. System (1) zum Sprühen von Partikeln (P) auf ein Substrat (22), **dadurch gekennzeichnet, dass** es umfasst:
- wenigstens einen Reaktor (2), umfassend wenigstens einen Eingang für flüssige Reagenzmittel (R1, R2), eine Reaktionszone (14) sowie eine Zone (18) zum Sammeln von Partikeln (P), welche ausgehend von den flüssigen Reagenzmitteln in der Reaktionszone erzeugt werden;
- eine Abgabevorrichtung (21), welche es erlaubt, die Partikel (P) auf das Substrat (22) zu sprühen; und
- Mittel (26) zum Befördern der Partikel (P) von der Sammelzone (18) zu der Abgabevorrichtung (21),
sowie dadurch, dass es ferner umfasst:
- eine Sammeleinheit (24) für die Partikel (P)
- eine Sammeleinheit (32) für Additivelemente (Ai);
- eine Mischungszone (36) für die Partikel (P) und die Additivelemente (Ai);
- eine Düse (38) zum Sprühen der Mischung aus Partikeln und Additivelementen.

2. System nach Anspruch 1, **dadurch gekennzeichnet, dass** der Reaktor (2) ein Mikrofluid-Reaktor ist, vorzugsweise vom Typ, welcher Platten (8) aus Silica, aus Silizium, aus Glas, aus Keramik, aus Polymer oder aus Kunststoff umfasst, welche gravierte Kanäle (10) besitzen, oder vom Typ, welcher Kapillarröhren umfasst, welche untereinander kommunizieren.

3. System nach Anspruch 1 oder Anspruch 2, **dadurch gekennzeichnet, dass** die Abgabevorrichtung (21) ferner ein Mischungselement (40) umfasst, welches in der Mischungszone (36) angeordnet ist, wobei das Mischungselement vorzugsweise eine Ultraschallsonde ist.

4. System nach einem der vorhergehenden Ansprüche, **dadurch gekennzeichnet, dass** der Teil stromabwärts der Mischungszone (36) eine Pufferzone bildet.

5. System nach einem der vorhergehenden Ansprüche, **dadurch gekennzeichnet, dass** es mehrere Reaktoren (2, 2') umfasst.

6. System nach einem der vorhergehenden Ansprüche, **dadurch gekennzeichnet, dass** es ebenfalls Mittel (44) zum Sintern der Partikel umfasst.

7. System nach einem der vorhergehenden Ansprüche, **dadurch gekennzeichnet, dass** es derart eingerichtet ist, dass die von dem Reaktor ausgegebenen Partikel (P) eine Form aufweisen, deren größte Abmessung kleiner als 100 µm ist.

8. Verfahren zum Sprühen von Partikeln (P) auf ein Substrat (22) mit Hilfe eines Systems (1) nach einem der vorhergehenden Ansprüche, **dadurch gekennzeichnet, dass** es die folgenden Schritte umfasst:
- Versorgen des Reaktors (2) mit flüssigen Reagenzmitteln (R1, R2);
- Steuern der chemischen Reaktion innerhalb des Reaktors (2);
- Steuern der Durchflussrate an Partikeln (P), welche auf das Substrat (22) gesprüht werden, durch die Abgabevorrichtung (21).

9. Verfahren zum Herstellen durch 3D-Druck von wenigstens zwei benachbarten Komponenten (62, 56) einer Batterie (100), vorzugsweise eines Kollektors (62) und einer an dem Kollektor gebildeten Elektrode (56), **dadurch gekennzeichnet, dass** es mit Hilfe eines Systems (1) nach einem der Ansprüche 1 bis 7 durchgeführt wird und zwei Reaktoren (2', 2) umfasst, welche jeweils dazu eingerichtet sind, erste Partikel (P') sowie zweite Partikel (P) zu liefern, wobei die eine (62) der beiden benachbarten Batteriekomponenten mit Hilfe der ersten Partikel (P') gebildet wird, welche zunächst abgelagert und dann gesintert werden, um anschließend als Substrat für das Anlagern von zweiten Partikeln (P) zu dienen, welche nach einem Sintern die andere (56) der beiden benachbarten Batteriekomponenten bilden.

## Claims

1. System (1) for spraying particles (P) onto a substrate (22), **characterised in that** it comprises:
- at least one reactor (2) comprising at least one inlet for liquid reagents (R1, R2), a reaction zone (14), as well as a zone (18) for the collection of the particles (P) produced from the liquid reagents in the reaction zone;
- a dispensing device (21) allowing the particles (P) to be sprayed onto the substrate (22); and
- means (26) for guiding the particles (P) from said collection zone (18) towards said dispensing device (21),
and **in that** it also comprises:
- a collector (24) of said particles (P);
- a collector (32) of additive elements (Ai);
- a zone for the mixing (36) of the particles (P) and of the additive elements (Ai);
- a nozzle (38) for the spraying of the mixture of particles and of additive elements.

2. System according to claim 1, **characterised in that** said reactor (2) is a microfluidic reactor, preferably of the type comprising plates (8) made from silica, silicon, glass, ceramic, polymer or plastic having etched channels (10), or of the type comprising capillary tubes communicating with each other.

3. System according to claim 1 or claim 2, **characterised in that** the dispensing device (21) also comprises a mixing member (40) arranged in the zone for mixing (36), said mixing member being preferably an ultrasound probe.

4. System as claimed in any preceding claim, **characterised in that** the portion downstream from the zone for mixing (36) forms a buffer zone.

5. System as claimed in any preceding claim, **characterised in that** it comprises several reactors (2, 2').

6. System as claimed in any preceding claim, **characterised in that** it also comprises means (44) for sintering particles.

7. System as claimed in any preceding claim, **characterised in that** it is configured in such a way that the particles (P) coming from the reactor have a shape of which the largest dimension is less than 100 µm.

8. Method for spraying particles (P) onto a substrate (22) using a system (1) as claimed in any preceding claim, **characterised in that** it comprises the following steps:
- supplying the reactor (2) with liquid reagents (R1, R2);
- controlling the chemical reaction in the reactor (2);
- controlling the flow rate of particles (P) sprayed onto the substrate (22) by the dispensing device (21).

9. Method of manufacturing via 3D printing of at least two adjacent components (62, 56) of a battery (100), preferably a collector (62) and an electrode (56) formed on the collector, **characterised in that** it is implemented using a system (1) according to any of claims 1 to 7 and comprising two reactors (2', 2) respectively configured to supply first particles (P') as well as second particles (P), with one (62) of said two adjacent battery components being carried out using the first particles (P') which are first deposited then sintered, in order to then be used as a substrate for the deposition of the second particles (P) forming, after sintering, the other (56) of said two adjacent battery components.
